# EUROPÄISCHE PATENTANMELDUNG

(11) **EP 2 022 329 A2**
(43) Veröffentlichungstag der Anmeldung: **11.02.2009**
(21) Anmeldenummer: 08161720.1
(22) Anmeldetag: 04.08.2008
(51) Int. Cl.: A01M 7/00

(54) **Fahrbare Spritzanordnung mit einem Spritzgestänge und Verfahren zur Einstellung deren Spritzdüsen**

(30) Priorität: 06.08.2007 DE 102007036870
(71) Anmelder: Leeb Mechanik GmbH, 94562 Oberpöring (DE)
(72) Erfinder: Leeb, Theodor, 94562, Oberpöring (DE)
(74) Vertreter: Reichert, Werner Franz

(57) **Zusammenfassung**

Die Erfindung betrifft eine fahrbare Spritzanordnung mit einem Spritzgestänge (10), das um eine in Fahrtrichtung verlaufende Achse pendelnd aufgehängt ist, wobei an dem Spritzgestänge eine Vielzahl von einstellbaren Düsen (20) angeordnet ist, durch die das Spritzmittel ausbringbar ist, wobei der Spritzwinkel der Düsen (20) bezüglich einer Vertikalen während der Fahrt gemeinsam oder abschnittsweise in Gruppen gemeinsam und/oder einzeln einstellbar ist. Es ist vorgesehen, dass die Anordnung Sensoren zur Messung einer Fahrgeschwindigkeit (V_{F}) und/oder einer Austrittsgeschwindigkeit des Spritzmittels und/oder einer Windgeschwindigkeit (V_{W}) und/oder einer Windrichtung sowie eine Rechneranordnung (ZR) zur Auswertung der Messdaten und wenigstens ein von der Rechnereinheit (ZR) gesteuertes Stellelement (M; 28) aufweist.

Die Erfindung betrifft weiterhin ein entsprechendes Verfahren zur Einstellung von Düsen (20) zum Ausbringen von Spritzmittel bei einer fahrbaren Spritzanordnung mit einem Spritzgestänge (10).

## Beschreibung

Die Erfindung betrifft eine fahrbare Spritzanordnung zum Ausbringen von flüssigen Spritz- und Düngemitteln mit den Merkmalen des Oberbegriffs des unabhängigen Anspruchs 1. Die Erfindung betrifft weiterhin ein Verfahren zur Einstellung der Spritzdüsen an einem Spritzgestänge mit den Merkmalen des Oberbegriffs des Anspruchs 7.

### Stand der Technik

Für den mobilen landwirtschaftlichen Einsatz sind seit langem weit ausladende Großspritzgeräte bekannt, die an landwirtschaftlichen Zugfahrzeugen befestigt und mit einem Spritztank gekoppelt sind, um eine Reihe von Spritzdüsen zu versorgen, die über die zu beiden Seiten des Fahrzeugs symmetrisch auskragenden Ausleger des Spritzgestänges verteilt sind.

Mittels dieser Spritzvorrichtungen soll jeweils eine definierte Menge an flüssigen Pflanzenschutzmitteln, Düngemitteln o. ä. auf das Feld aufgebracht werden. Hierbei werden vor allem Vorrichtungen verwendet, die eine Vielzahl von nach unten gerichteten Düsen aufweisen, die eine vorher definierte Menge von dem jeweiligen Mittel abgeben.

Hierbei gilt es, die Mittel über die gesamte Gestängebreite gleichmäßig zu verteilen. Dabei ist es auch wichtig, dass die Pflanze von allen Seiten gleichmäßig benetzt wird. Hierzu sind Sprüheinrichtungen mit mehreren Düsen über die gesamte Balkenbreite bekannt. Die Düsen sind im Allgemeinen in einem gleichmäßigen Abstand verteilt. Die Düsen stehen entweder senkrecht nach unten oder in einem festen Winkel zur Zielfläche.

Problematisch ist hierbei, dass sich aufgrund der äußeren Bedingungen, beispielsweise der Fahrgeschwindigkeit und/oder der vorherrschenden Windbedingungen eine unterschiedliche Abdrift der Spritzmitteltröpfchen bzw. des Spritzmittelnebels ergibt. Somit ist es schwierig, eine gleichmäßige Verteilung des Spritzmittels auf der Zielfläche zu gewährleisten.

Weiterhin entsteht bei zunehmender Fahrgeschwindigkeit ein so genannter Spritzschatten an den Pflanzen oder auf der Zielfläche. Das bedeutet, dass die Pflanzen beispielsweise nur von einer Seite her benetzt werden und die entgegengerichtet zur Fahrtrichtung liegenden Pflanzenseiten nur wenig bzw. gar nicht vom Spritzmittel bedeckt bzw. benetzt werden. Dies ergibt sich dadurch, dass die Flüssigkeitströpfchen eine Relativgeschwindigkeit bezüglich der Fahrgeschwindigkeit aufweisen. Die Flüssigkeitströpfchen treffen daher in einem bestimmten, meist schrägen Winkel auf die Pflanze bzw. Zielfläche, wobei sich der Winkel unter anderem aus der Austrittsgeschwindigkeit des Spritzmittels aus der Düse und der Fahrgeschwindigkeit der Landmaschine sowie den Windbedingungen ergibt.

Bekannte Spritzgestänge arbeiten mit Düsen, die senkrecht oder in einem fest definierten Winkel nach unten weisen. Es sind auch Systeme bekannt, bei denen der Winkel der Düsen verstellbar ist, wobei die Einstellung vor der Fahrt erfolgt und die Düsenwinkel während Fahrt nicht angepasst werden können. Ein weiteres System, dass die oben genannten Nachteile verhindern soll, verwendet Düsen mit zwei Spritzkegeln, wobei einer der Spritzkegel nach unten und der andere in einem starren Winkel nach hinten gerichtet ist.

Weiterhin sind luftunterstützte Systeme bekannt, die einen oder mehrere "Luftvorhänge" vor und/oder nach den Düsen aufweisen. Diese Luftvorhänge bzw. Luftschilde sollen verhindern, dass die Spritzrichtung durch Wind und/oder andere Einflüsse verändert wird. Durch den vor und/oder hinter der Düse nach unten gerichteten Luftstrom (Luftvorhang) wird der Düsenstrahl nach unten gedrückt. Weiterhin werden durch den Luftstrom die Blätter der Pflanzen bewegt. Die Nachteile dieses Systems bestehen zum einen darin, dass es bei der Anwendung zu einer ausgeprägten Staubentwicklung führt, was sich nachteilig auf die Pflanzen auswirken kann; zudem bewirkt die Erzeugung der Luftströme einen relativ hohen zusätzlichen Leistungsbedarf.

Eine weitere aus dem Stand bekannte Möglichkeit, um die oben beschriebene Problematik zu umgehen, besteht in der Verwendung von Mehrstoffdüsen, in denen mit Luftdruck die Tropfengröße beeinflusst werden kann.

Eine Möglichkeit, die Fahrtgeschwindigkeit zu berücksichtigen, wird beispielsweise in der DE 39 08 963 C2 beschrieben. Dieses Dokument zeigt ein fahrbares Spritzgerät mit geschwindigkeitsabhängiger Direkteinspeisung, wodurch gewährleistet werden kann, dass die Menge an verspritztem Pflanzenschutzkonzentrat pro Fläche gleich ist.

Die DE 698 08 434 T2 zeigt eine Sprühdüse zur Verteilung von Pflanzenschutzmitteln etc., bei der die Menge an versprühtem Mittel reguliert werden kann. Hierbei wird beispielsweise bei starken Windverhältnissen ein stark ausgeprägter Mittelstrahl verwendet, da dann die Dispersion aufgrund von Wind reduziert ist. Beim Verfahren zur Regelung der Feldspritzdüsen wird der Durchsatz des Spritzmittels in Abhängigkeit von Behandlungsparametern gesteuert, die mittels Sensoren ermittelt werden. Die Regulation erfolgt hierbei über ein Öffnen oder ein Schließen der Austrittsöffnung der Düse.

Die DE 40 25 915 A1 beschreibt eine Spritzvorrichtung mit einer Vielzahl von Düsen, deren Austrittsöffnungen in etwa senkrecht nach unten gerichtet sind. Um einen Abdrift von Spritzmitteltröpfchen zu verhindern ist vorgesehen, dass das Spritzgestänge auf seiner Rückseite einen Freiraum zur Arretierung der Düsen in unterschiedlichen Höhen- und Winkellagen aufweist.

Die US 2003 / 0 111 546 A1 offenbart eine landwirtschaftliche Spritzanordnung mit einem angehängten Spritzgestänge, bei dem ein automatischer Winddriftausgleich vorgesehen ist. Eine Steuereinheit verarbeitet Messdaten zur Windgeschwindigkeit und zur Windrichtung, zur Fahrgeschwindigkeit und zur Fahrtrichtung sowie zur gewünschten Überdeckung der Spritzkegel. Die errechneten Werte werden zur Steuerung des landwirtschaftlichen Trägerfahrzeugs verwendet, dessen Überfahrten über das Feld so justiert werden, dass sich eine gewünschte Überlappung an den Rändern der jeweiligen Arbeitsbreite ergibt, so dass insbesondere durch eine unerwünschte Winddrift keine unbedeckten Streifen und Flächen am Rand der Arbeitsbreite verbleiben. Eine Justierung oder eine Verstellbarkeit der Düsen oder des Spritzgestänges ist in diesem Zusammenhang allerdings nicht vorgesehen.

Die oben beschriebenen Systeme weisen jedoch den Nachteil auf, dass die Voreinstellung vor Beginn des Spritzvorgangs durchgeführt wird und keine dynamische Anpassung an Änderungen in der Windgeschwindigkeit etc. erfolgt.

Es sind allerdings auch Systeme bekannt, bei denen die Spritzdüsen während der Fahrt verstellt werden können. So beschreibt die DE 198 21 277 A1 ein Verfahren und eine Einrichtung zum Ausbringen und Verteilen von Spritzmittel. Über eine Gebläseeinrichtung und eine Mehrzahl von Düsenelementen wird das Spritzmittel ausgebracht. Die Drehgeschwindigkeit und/oder der Anstellwinkel und/oder die Ausblasrichtung der Gebläseeinrichtung und/oder die Spritzmittelmenge können in Abhängigkeit von der Windgeschwindigkeit und/oder der Windrichtung variiert werden.

Aus der US 6 382 523 B1 ist schließlich ein Tankfahrzeug mit heckseitig und seitlich des Fahrzeugs angebrachten Sprüheinrichtungen bekannt. Zumindest die seitlich am Fahrzeugrumpf angeordneten Spitzgestänge sind so einstellbar, dass eine bestimmte Fahrbahnbreite abgedeckt werden kann. Mit den Sprüheinrichtungen kann eine Reinigungsflüssigkeit, insbesondere Wasser unter vorgegebenem Druck auf eine Fahrbahn aufgebracht werden, wodurch diese gereinigt werden kann.

### Beschreibung

Das Ziel der vorliegenden Erfindung besteht darin, ein Spritzverfahren und eine Spritzanordnung zur Verfügung zu stellen, bei denen die Spritzrichtung dynamisch an die äußeren Bedingungen, beispielsweise an die Windgeschwindigkeit und/oder an die Windrichtung angepasst werden kann, um eine Abdrift der Spritzmitteltropfen zu minimieren bzw. ganz zu verhindern.

Die Erfindung bezieht sich auf eine Spritzvorrichtung, die im Allgemeinen an eine landwirtschaftliche Zugmaschine angehängt oder dieser aufgesattelt wird. Alternativ sind auch Selbstfahrermodelle möglich. Die Spritzvorrichtung wird im vorliegenden Zusammenhang allgemein als fahrbare Spritzanordnung bezeichnet, unabhängig davon, ob es sich um eine angehängte oder aufgesattelte oder eine selbst fahrende Spritzvorrichtung handelt. Die Spritzvorrichtung bzw. -anordnung besteht aus einem Spritzgestänge, das um eine in Fahrtrichtung verlaufende Achse pendelnd aufgehängt ist, und das mit einer Vielzahl von Düsen ausgestattet ist. Diese Düsen stehen mit einem Tank in Verbindung, der das Spritzmittel enthält. Die Vorrichtung kann auch mehrere Tanks enthalten, wobei die verschiedenen Tanks unterschiedliche Spritzmittel enthalten können, die je nach gewünschter Anwendung gemischt werden können. Beispielsweise kann ein Tank Verdünnungsflüssigkeit, insbesondere Wasser, enthalten, die während des Betriebs unter Berücksichtigung der pro Fläche benötigten Menge an Spritzmittel entsprechend gemischt werden.

Das Spritzgestänge weist typischerweise eine relativ große Arbeitsbreite auf, mit der eine gewisse Feldbreite durch einen einzigen Arbeitsgang abgedeckt werden kann. Diese Arbeitsbreite würde jedoch einen Transport von einem Einsatzort zum anderen über normale Strassen unmöglich machen. Aus diesem Grund ist das Spritzgestänge klappbar ausgestaltet.

Der Winkel der Düse und damit deren Spritzwinkel kann während der Fahrt verstellt bzw. eingestellt werden. Beispielsweise kann der Fahrer die Düsenwinkel von der Zugmaschine aus mittels einer Art Joystick verstellen bzw. in vorgebbaren Grenzen beeinflussen bzw. justieren. Der Spritzwinkel der Düsen bezüglich einer Vertikalen kann während der Fahrt gemeinsam oder abschnittsweise in Gruppen gemeinsam und/oder einzeln einstellbar sein. Weiterhin weist die Anordnung Sensoren zur Messung einer Fahrgeschwindigkeit V_{F} und/oder einer Austrittsgeschwindigkeit des Spritzmittels und/oder einer Windgeschwindigkeit V_{W} und/oder einer Windrichtung sowie eine Rechneranordnung zur Auswertung der Messdaten und wenigstens ein von der Rechnereinheit gesteuertes Stellelement auf. Darüber hinaus kann die Anordnung Sensoren zur Messung des Spritzdruck und/oder des Volumenstroms und/oder der Austrittsgeschwindigkeit des Spritzmittels aus den Düsen aufweisen. Zusätzlich kann der Spritzwinkel der Düsen in Abhängigkeit vom Spritzdruck und/oder von der Düsengröße und/oder des Volumenstroms an Spritzmittel durch die Düsen einstellbar sein. Die Einstellbarkeit der Düsen kann bspw. dadurch erreicht werden, dass eine Verbindung zwischen den Düsen und den Düsenleitungen drehbar ist. Wahlweise kann das gesamte Spritzgestänge oder Teile davon drehbar oder quer zur Fahrtrichtung kippbar ausgebildet sein. Zur Verstellung des Spritzwinkels der Düsen kann sich bspw. ein elektromotorischer, ein hydraulischer und/oder ein pneumatischer Antrieb bzw. mehrere solcher Antriebe eignen.

Die Verstellung zur Zielfläche (Spritzfläche) kann in Abhängigkeit der Fahrgeschwindigkeit und/oder der absoluten Luftgeschwindigkeit (dies entspricht dem Quotienten aus der Fahrgeschwindigkeit und der Windgeschwindigkeit) und/oder der Windgeschwindigkeit und/oder der Windrichtung an den Düsen erfolgen. Weitere Faktoren, die auf sinnvolle Weise die Verstellung der Düse beeinflussen können, sind die teilweise voreinstellbaren und bekannten Faktoren wie beispielsweise der Spritzdruck und/oder die Düsengröße und/oder die Ausbringmenge (Volumentstrom) und/oder die Austrittsgeschwindigkeit des Spritzmittels an der Düse.

Die Düsenwinkelverstellung wird dabei in Abhängigkeit von wenigstens zwei der gemessenen und/oder bekannten Parameter eingestellt. D.h. die Düsenwinkelverstellung erfolgt beispielsweise in Abhängigkeit von der voreingestellten Ausbringmenge und der unter der Fahrt ermittelten Fahrgeschwindigkeit. Es können aber auch mehrere Parameter in die Berechnung für die Winkelverstellung einfließen.

Die Einstellung der Düsenwinkel erfolgt mittels einer Stelleinrichtung, die die Düsen derart einstellt, dass die horizontalen Geschwindigkeitskomponenten aus Fahrgeschwindigkeit und natürlicher Luftströmung ausgeglichen werden. Dadurch trifft der Flüssigkeitstropfen vorzugsweise annähernd senkrecht auf die Zielfläche.

Der Anwender kann ggf. den Winkel selbst anpassen und festlegen, um gezielt die Pflanze und/oder die Zielfläche von einer bestimmten Richtung zu benetzen.

Bei der erfindungsgemäßen fahrbaren Spritzanordnung ist vorgesehen, dass an dem Spritzgestänge und/oder an der Maschine, beispielsweise im Falle einer selbst fahrenden Spritzanordnung, verschiedene Sensoren angeordnet sind. Diese dienen dem Erfassen der relativen Windgeschwindigkeit, der Windrichtung und/oder der Austrittsmenge an Spritzmittel, d.h. dem Volumenstrom aus der Düse. Beispielsweise können so genannte Propellersensoren mit mehreren Messbechern verwendet werden, um die Windgeschwindigkeit und/oder Windrichtung zu ermitteln. Weiterhin können Messeinrichtung vorgesehen sein, die die Fahrgeschwindigkeit und/oder den Spritzdruck und/oder die Ausbringmenge ermitteln. Die Daten können anschließend in ein Rechnersystem eingespeist werden, das aufgrund der ermittelten bzw. bekannten Daten den optimale Winkel berechnet, den die Düse einnehmen sollte, damit ein optimaler Spritzkegel entsteht und somit eine optimale Verteilung des Sprühmittels am Boden erfolgt.

Die Rechneranordnung zur Berechnung der Düsenwinkel, befindet sich beispielsweise direkt am Spritzgestänge, an der Maschine, beispielsweise bei einer gezogenen Spritzanordnung, oder aber in der Fahrerkabine der Zugmaschine.

Die berechneten Werte werden von der Rechneranordnung zu einem Stellelement übertragen, das die Winkeleinstellung der Düsen vermittelt.

Zur Ermittlung des Volumenstroms aus der Düse und/oder des Spritzdrucks und/oder der Ausbringmenge werden allerdings nicht zwingend Sensoren benötigt. Wenn die Werte voreingestellt sind, können sie dem System als feste Parameter zur Verfügung gestellt werden.

Beispielsweise wird der Winkel aus der Austrittsmenge an Spritzmittel, Fahrgeschwindigkeit der Zugmaschine und Windgeschwindigkeit ermittelt. Je langsamer das Spritzgestänge über die Zielfläche fährt, desto steiler ist im Allgemeinen der eingestellte Düsenwinkel. Die Windrichtung kann entsprechend zu Modifikationen beitragen.

Damit eine einfache Winkelverstellung der Düsen möglich ist, sind die Düsen an einem drehbar gelagerten Düsenrohr befestigt. Weiterhin beinhaltet das einstellbare Spritzgestänge ein so genanntes Stellglied, dass die Düsenleitung verdreht, und somit den Düsenwinkel zur Zielfläche einstellen kann. Weiterhin kann die Verbindung zwischen den Düsen und den Düsenleitungen drehbar sein, um die Winkelverstellung zu erleichtern,

Die Winkelverstellung der Düsen aufgrund der berechneten Daten kann elektrisch, hydraulisch oder pneumatisch erfolgen. Dies kann beispielsweise durch einen Pneumatikzylinder und/oder einen Luftbalg und/oder einen Hydraulikzylinder mit Stickstoffblase und/oder Stellmotor etc. erfolgen.

Weiterhin könnten die Düsen beispielsweise einzeln mittels kleiner Servomotoren verstellbar sein. Dabei erfolgt die Verstellung beispielsweise am Düsenhalter.

Erfolgt die Einzelverstellung mit einem Kugelgelenk, so stehen für die Verstellung viele Freiheitsgrade zur Verfügung, so dass auch seitliche Winde ausgeglichen werden können.

Gemäß einer bevorzugten Ausführungsform sind alle Düsen an einem Rohr befestigt. Über dieses so genannte Spritzrohr wird das Spritzmittel vom Spritzmitteltank aus zu den Düsen geleitet. Die Winkeleinstellung für die Düsen kann in diesem Fall beispielsweise durch eine definierte Drehung des Spritzrohrs erfolgen, die dazu führt, dass der Winkel aller Düsen gegenüber der Bodenoberfläche verändert wird.

Alternativ könnte auch das komplette Gestänge, oder Teile des Gestänges quer zur Fahrtrichtung gekippt werden, um so den Düsenwinkel einer Vielzahl von Düsen gleichzeitig einzustellen.

Das Verdrehen bzw. Verkippen des Spritzgestänges kann für das gesamte Gestänge gleichzeitig erfolgen. Alternativ kann jede Seite einzeln verdreht bzw. verkippt werden.

Die Verstellung des Düsenrohrs oder des Gestänges kann über einen geschlossen Regelkreis erfolgen. Zur Ermittlung des Spritzwinkels zur Zielfläche wird ein Kennfeld erstellt. Dieses Kennfeld gibt den optimalen Spritzwinkel zur Zielfläche in Abhängigkeit von z.B. der absoluter Luftgeschwindigkeit, der Düsengröße, dem Spritzdruck etc. wieder.

Aufgrund dieses ermittelten Winkels wird der Stellmotor angesteuert. Über ein Sensorelement, insbesondere einen Winkelsensor o. ä. wird der momentane Spritzwinkel an die Rechnereinheit zurückgemeldet, so dass ein geschlossener Regelkreis entsteht.

Mittels der vorliegenden Erfindung können auch relative Windgeschwindigkeiten gegen die Fahrtrichtungen und oder von Null, bzw. Wind, der von der Seite kommt ausgeglichen werden.

Weiterhin umfasst die vorliegende Erfindung ein Verfahren zur Einstellung von Düsen zum Ausbringen von Spritzmittel bei einer fahrbaren Spritzanordnung mit einem Spritzgestänge, das um eine in Fahrtrichtung verlaufende Achse pendelnd aufgehängt ist, wobei der Spritzwinkel der Düsen bezüglich einer Vertikalen während der Fahrt gemeinsam oder abschnittsweise in Gruppen gemeinsam und/oder einzeln einstellbar ist. Es ist vorgesehen, dass eine Fahrgeschwindigkeit und/oder eine Austrittsgeschwindigkeit des Spritzmittels und/oder eine Windgeschwindigkeit und/oder eine Windrichtung gemessen und ausgewertet und in Abhängigkeit von den gemessenen Werten die Winkeleinstellung der Düsen eingestellt, insbesondere geregelt wird. Dabei kann weiterhin eine Erfassung eines Spritzdrucks und/oder einer Düsengröße und/oder eines Volumenstroms und deren Auswertung zur Einstellung der Düsen vorgesehen sein. Wahlweise können die Düsen auch einzeln eingestellt werden. Vorzugsweise jedoch werden mehrere oder alle Düsen zumindest einer Seite des Spritzgestänges gemeinsam eingestellt, bspw. über ein verstellbares Träger- und/oder Zuleitungsrohr, das um eine Längsachse verdreht werden kann, die quer zur Fahrtrichtung orientiert ist.

### Figurenbeschreibung

Weitere Merkmale, Ziele und Vorteile der vorliegenden Erfindung gehen aus der nun folgenden detaillierten Beschreibung einer bevorzugten Ausführungsform der Erfindung hervor, die als nicht einschränkendes Beispiel dient und auf die beigefügten Zeichnungen Bezug nimmt. Gleiche Bauteile weisen dabei grundsätzlich gleiche Bezugszeichen auf und werden teilweise nicht mehrfach erläutert.
- Fig. 1: zeigt einen Teil eines Spritzgestänges mit Düsen;
- Fig. 2: zeigt eine seitliche Darstellung eines Spritzgestänges mit Düse;
- Fig. 3: zeigt eine Steuerung der Winkeleinstellung und
- Fig. 4 / 5: zeigen jeweils eine detaillierte Darstellung eines Teils eines Spritzgestänges mit Düsen.

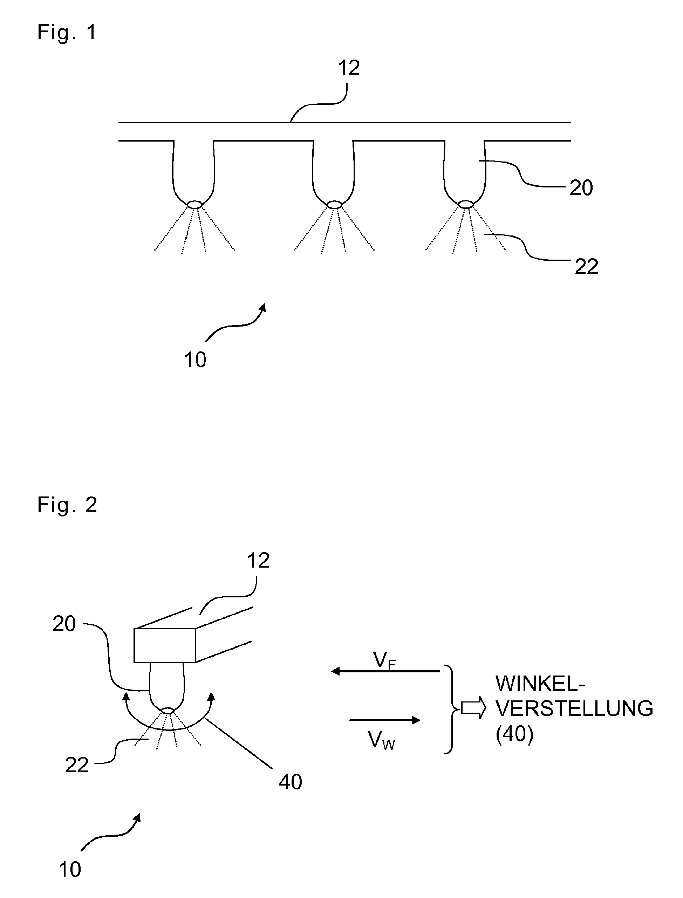

Eine mögliche Ausgestaltung eines Teils eines einstellbaren Spritzgestänges 10 wird anhand von Fig. 1 illustriert. An dem Rahmen 12 des Spritzgestänges 10 befindet sich eine Mehrzahl von Düsen 20, durch die das Spritzmittel in einem Spitzstrahl 22 auf die Zielfläche aufgebracht wird.

Die Fig. 2 zeigt eine seitliche Darstellung eines Spritzgestänges 10 mit Düse 20. Die Einstellung des Düsenwinkels bzw. Spritzwinkels der Düse erfolgt aufgrund verschiedener äußerer Parameter, die teilweise mittels Sensoren gemessen werden. Im gezeigten Ausführungsbeispiel wird die Fahrtgeschwindigkeit V_{F} und die Windgeschwindigkeit V_{W} ausgewertet. Aus diesen Parametern kann mittels einer Winkelverstellung 40 ein optimaler Düsenwinkel des Spritzstrahls 22 berechnet werden, der anschließend eingestellt werden kann.

Die in Fig. 2 dargestellte Ausführungsform stellt die Variante dar, bei der der Rahmen 12 des Spritzgestänges 10 ganz oder teilweise verdreht wird, so dass die Winkel der gesamten Anzahl der betroffenen Düsen 20 gleichzeitig ver- bzw. eingestellt werden.

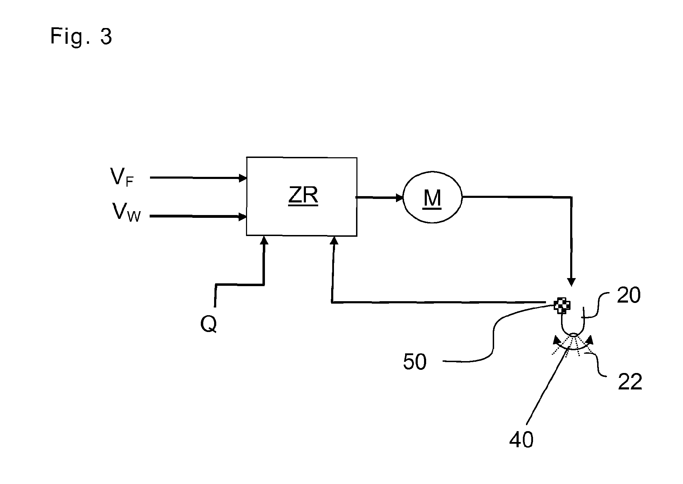

Die Fig. 3 stellt schematisch die Steuerung der Winkeleinstellung dar. Verschiedene Äußere Bedingungen, die auf den Düsenstrahl 22 einen Einfluss ausüben, werden beispielsweise mittels Sensoren ermittelt. Dazu zählen beispielsweise die Windgeschwindigkeit V_{W} und/oder die Fahrgeschwindigkeit V_{F}. Die Fahrgeschwindigkeit kann wahlweise separat gemessen oder aber von einem Fahrgeschwindigkeitsanzeiger des Träger- oder Zugfahrzeugs (Tachometer) abgegriffen werden.

Weiterhin ist es beispielsweise möglich, den Volumenstrom Q an den Düsen 20 einzustellen oder zu messen. Diese Daten werden an eine zentrale Rechnereinheit ZR übertragen und von dieser ausgewertet. Aus den Daten berechnet die zentrale Rechner- bzw. Steuerungseinheit ZR den optimalen Düsenwinkel, der benötigt wird, um die Zielfläche bzw. Zielpflanze umfassend mit dem Spritzmittel zu benetzen.

Diese Informationen leitet die zentrale Steuerungseinheit ZR an einen Motor M weiter, der mit der Düse 20 gekoppelt ist. Die Ansteuerung des Motors M bewirkt eine Verstellung 40 der Düse 20 in den vorher berechneten Winkel.

Die Verstellung des Düsenrohrs 24 oder des Gestänges 10, 12 kann vorzugsweise über einen geschlossen Regelkreis erfolgen. Zur Ermittlung des Spritzwinkels zur Zielfläche wird ein Kennfeld in Abhängigkeit von z.B. der absoluter Luftgeschwindigkeit, der Düsengröße, dem Spritzdruck etc. erstellt. Dieses Kennfeld gibt den optimalen Spritzwinkel zur Zielfläche wieder.

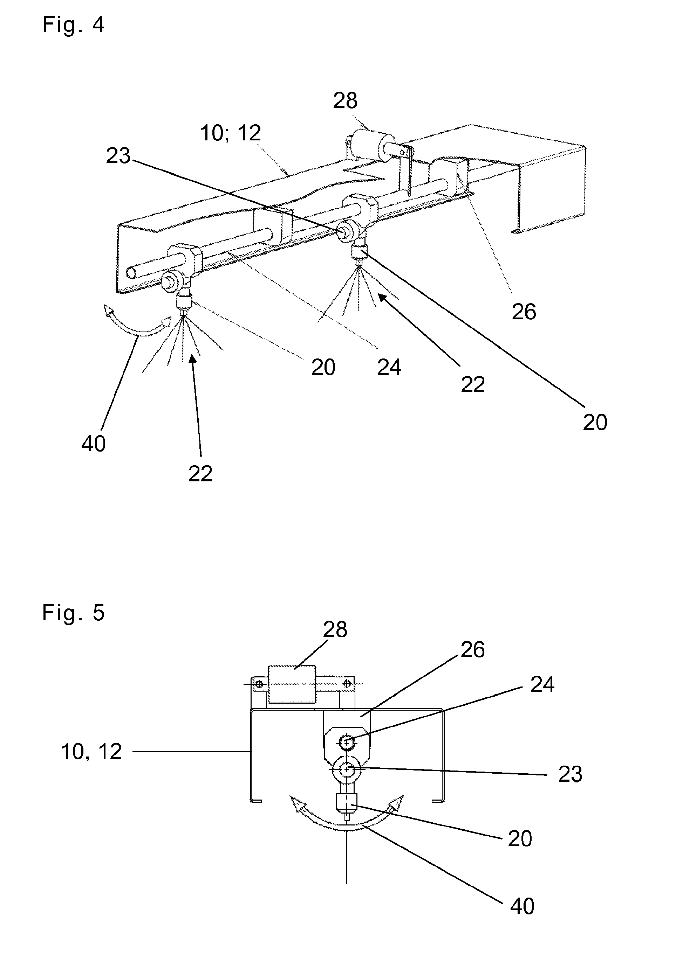

Aufgrund dieses ermittelten Winkels wird der Stellmotor 28 (vgl. Fig. 4 und Fig. 5) angesteuert. Über einen Winkelsensor 50 oder ein anderes Sensorelement wird der momentane Spritzwinkel an die Rechnereinheit ZR zurückgemeldet, so dass ein geschlossener Regelkreis entsteht.

Die Figuren 4 und 5 verdeutlichen eine bevorzugte Ausführungsform, bei der die Düsen 20 durch Verdrehen des Düsenrohrs 24 gleichzeitig verstellt werden. Das Düsenrohr 24 ist vom Rahmen 12 des Spritzgestänges 10 umfasst und mittels einer Lagerung 26 positioniert und verdrehbar gelagert. Der Stellmotor 28 zum Verdrehen des Düsenrohrs 24 ist am Rahmen 12 des Spritzgestänges 10 angeordnet. Der Stellmotor 28 wird beispielsweise elektrisch angesteuert und betrieben. Die Aktivierung des Stellmotors 28 führt zu einem Verdrehen des Düsenrohrs 24 um einen vorgebbaren Winkelbetrag. Dadurch erfolgt eine gleichzeitige Verstellung des Winkels 40 mehrerer Düsen 20.

Den Düsen 20 ist weiterhin jeweils ein Anschluss 23 für die Düsenleitung (hier nicht dargestellt) zugeordnet. Die Düsenleitungen sind mit dem Spritzmitteltank (ebenfalls nicht dargestellt) verbunden und versorgen die Düsen 20 mit dem entsprechenden Spritzmittel bzw. mit einem Spritzmittelgemisch.

Alternativ (hier nicht dargestellt) kann auch jeder Düse 20 ein Motor 28 zugeordnet sein, so dass jede Düse 20 einzeln eingestellt werden kann. Somit wäre denkbar, dass beispielsweise die äußeren Düsen 20 anders eingestellt werden können als die Düsen 20 im mittleren Bereich der Anordnung. Diese Variante bedingt jedoch eine große Vielzahl an Sensoren, damit den Düsen sinnvolle Einstellwerte zugeordnet werden können. So können bspw. über die Länge des Spritzgestänges verteilt mehrere Windgeschwindigkeits- und -richtungssensoren angeordnet sein. Je nach gemessenen Werten, die durchaus jeweils unterschiedlich sein können, können sich unterschiedliche Winkelvorgaben für die jeweils betroffenen Düsen ergeben.

Die Erfindung ist nicht auf die vorstehenden Ausführungsbeispiele beschränkt. Vielmehr ist eine Vielzahl von Varianten und Abwandlungen denkbar, die von dem erfindungsgemäßen Gedanken Gebrauch machen und deshalb ebenfalls in den Schutzbereich fallen.

### Bezugszeichenliste

- 10: Spritzgestänge
- 12: Rahmen
- 20: Düse
- 22: Düsenstrahl
- 23: Anschluss für Düsenleitung
- 24: Düsenrohr
- 26: Lagerung
- 28: Stellmotor
- 40: Winkelverstellung
- 50: Winkelsensor
- M: Motor
- Q: Volumenstrom
- V_{F}: Fahrgeschwindigkeit
- V_{W}: Windgeschwindigkeit
- ZR: zentrale Rechner- / Auswerte- / Steuerungseinheit

## Patentansprüche

1. Fahrbare Spritzanordnung mit einem Spritzgestänge (10), das um eine in Fahrtrichtung verlaufende Achse pendelnd aufgehängt ist, wobei an dem Spritzgestänge eine Vielzahl von einstellbaren Düsen (20) angeordnet ist, durch die das Spritzmittel ausbringbar ist, wobei der Spritzwinkel der Düsen (20) bezüglich einer Vertikalen während der Fahrt gemeinsam oder abschnittsweise in Gruppen gemeinsam und/oder einzeln einstellbar ist, **dadurch gekennzeichnet, dass** die Anordnung Sensoren zur Messung einer Fahrgeschwindigkeit (V_{F}) und/oder einer Austrittsgeschwindigkeit des Spritzmittels und/oder einer Windgeschwindigkeit (V_{W}) und/oder einer Windrichtung sowie eine Rechneranordnung (ZR) zur Auswertung der Messdaten und wenigstens ein von der Rechnereinheit (ZR) gesteuertes Stellelement (M; 28) aufweist.

2. Fahrbare Spritzanordnung nach Anspruch 1, **dadurch gekennzeichnet, dass** die Anordnung Sensoren zur Messung des Spritzdruck und/oder des Volumenstroms (Q) und/oder der Austrittsgeschwindigkeit des Spritzmittels aus den Düsen (20) aufweist.

3. Fahrbare Spritzanordnung nach Anspruch 1 oder 2, **dadurch gekennzeichnet, dass** der Spritzwinkel der Düsen (20) zusätzlich in Abhängigkeit vom Spritzdruck und/oder der Düsengröße und/oder des Volumenstroms (Q) an Spritzmittel durch die Düsen (20) einstellbar ist.

4. Fahrbare Spritzanordnung nach einem der Ansprüche 1 bis 3, **dadurch gekennzeichnet, dass** eine Verbindung zwischen den Düsen (20) und den Düsenleitungen drehbar ist.

5. Fahrbare Spritzanordnung nach einem der Ansprüche 1 bis 4, **dadurch gekennzeichnet, dass** das gesamte Spritzgestänge (10) oder Teile davon drehbar oder quer zur Fahrtrichtung kippbar sind.

6. Fahrbare Spritzanordnung nach einem der Ansprüche 1 bis 5, **dadurch gekennzeichnet, dass** der Spritzwinkel der Düsen (20) elektromotorisch, hydraulisch oder pneumatisch einstellbar ist.

7. Verfahren zur Einstellung von Düsen (20) zum Ausbringen von Spritzmittel bei einer fahrbaren Spritzanordnung mit einem Spritzgestänge (10), das um eine in Fahrtrichtung verlaufende Achse pendelnd aufgehängt ist, wobei der Spritzwinkel der Düsen (20) bezüglich einer Vertikalen während der Fahrt gemeinsam oder abschnittsweise in Gruppen gemeinsam und/oder einzeln einstellbar ist, **dadurch gekennzeichnet, dass** eine Fahrgeschwindigkeit (V_{F}) und/oder eine Austrittsgeschwindigkeit des Spritzmittels und/oder eine Windgeschwindigkeit (V_{W}) und/oder eine Windrichtung gemessen und ausgewertet und in Abhängigkeit von den gemessenen Werten die Winkeleinstellung der Düsen (20) eingestellt, insbesondere geregelt wird.

8. Verfahren nach Anspruch 7, **gekennzeichnet durch** eine Erfassung eines Spritzdrucks und/oder einer Düsengröße und/oder eines Volumenstroms (Q) und deren Auswertung zur Einstellung der Düsen (20).

9. Verfahren nach Anspruch 7 oder 8, **dadurch gekennzeichnet, dass** die Düsen (20) einzeln eingestellt werden können.
